# EUROPEAN PATENT APPLICATION

(11) **EP 2 696 028 A1**
(43) Date of publication of application: **12.02.2014**
(21) Application number: 12179383.0
(22) Date of filing: 06.08.2012
(51) Int. Cl.: F01D 5/14, F01D 5/28

(54) **A turbomachine component for hot gas path of a gas turbine**

(71) Applicant: Siemens Aktiengesellschaft, 80333 München (DE)
(72) Inventor: Bahador, Mehdi, 61245 Finspang (SE)

(57) **Abstract**

The present invention provides a turbomachine component (1) suitable to be positioned in a hot gas path (5) of a gas turbine engine (6). The turbomachine component includes a base part (10) and an external part (20). The base part is manufactured from a first material and the external part is manufactured from a second material. The external part is manufactured in a final shape (21) of the external part. Subsequently, the external part in the final shape is fixedly connected to the base part such that at least a part (14) of a surface (12) of the base part is covered by the external part. The first material has a first thermal conductivity and the second material has a second thermal conductivity. The first thermal conductivity is greater than the second thermal conductivity.

## Description

The present technique relates to a turbomachine component for a hot gas path of a gas turbine and a method for manufacturing the turbomachine component.

In gas turbine engines, multiple components are present that are subjected to extreme temperatures during operation of the turbine. These components generally are present in the hot gas path of the gas turbine, for example, a plurality of vanes in the hot gas path. Other examples include a plurality of blades, heat shields, and so forth. Due to exposure to high temperatures, the components experience high thermal stress and gradually weaken. They become susceptible to failures such as creep failure. The performance of the components depends on their ability to withstand the thermal stress and this limits the useful life of the turbine. Furthermore, the ability of these components to withstand the thermal stress also decides the operational parameters of the turbine such as maximum temperature at which a gas turbine engine can operate, and subsequently effect the overall output generated from the turbine. Thus, to achieve better performance of the components and increase their useful life, there has been a constant need to increase the ability of the components to withstand the thermal stress in gas turbines.

To achieve better performance by increasing the ability of the components to withstand the thermal stress in gas turbines two basic approaches are adopted. First approach is to modify or improve the component itself. This approach includes use of high quality materials, such as superalloys, to build the components in their entirety. The superalloys have the capability to withstand high levels of thermal stress. However, these superalloys are expensive and their use in fabricating the components results in high overall price of the components and thus, poses an economic disadvantage.

Second approach is by introducing external agents, primarily cooling techniques for example convection cooling, impingement cooling, film cooling, transpiration cooling, etc. However, introducing such cooling techniques does not increase the ability of the components to withstand the thermal stress in gas turbines but merely limits the thermal stress itself by providing a cooling effect on the component.

Thus, an object of the invention is to increase the ability of the components to withstand thermal stress in gas turbines in an economically advantageous way.

The object is achieved by a turbomachine component of claim 1 and a method for manufacturing the turbomachine component of claim 12. Advantageous developments emerge from the dependent claims.

The present invention provides a turbomachine component suitable to be positioned in a hot gas path of a gas turbine. The turbomachine component includes a base part and an external part. The base part is manufactured from a first material and the external part is manufactured from a second material. The external part is manufactured in a final shape of the external part. Subsequently, the external part in the final shape is fixedly connected to the base part such that at least a part of a surface of the base part is covered by the external part. Furthermore, the first material has a first thermal conductivity and the second material has a second thermal conductivity. The first thermal conductivity is greater than the second thermal conductivity.

In one embodiment of the turbomachine component, the external part is manufactured in the final shape of the external part by an additive manufacturing process. The advantage of additive manufacturing process is its ability to create complex geometrical features. Thus, the external part may have desired complex geometrical features which may not be possible or may be too cumbersome to achieve by conventional machining techniques.

In another embodiment of the turbomachine component, the external part is manufactured in the final shape of the external part by a laser melting process. The laser melting process may be direct metal sintering or selective laser sintering. Thus, the external part may be manufactured from ceramic material or metallic material by using the laser melting process, and at the same time may contain complex geometrical features such as complex cooling passages, long cooling passages, ribbed ducts, and so on. Furthermore, the external part may be manufactured from very high resistance material against oxidation and hot corrosion.

In another embodiment of the turbomachine component, the first thermal conductivity is between 1.5 to 2.5 times of the second thermal conductivity, and more particularly between 1.8 to 2.2 times of the second thermal conductivity. The relation between the thermal conductivities helps in selecting the first material and the second material such that the invention may be optimally used.

In another embodiment of the turbomachine component, the external part contains a ceramic material. The ceramic material may be silicon carbide or silicon nitride or even ceramic composites that can tolerate high temperatures. Thus, regions of the component that contain the ceramic material can tolerate and perform in high temperatures.

In another embodiment of the turbomachine component, the external part in its final shape is fixedly connected to the base part by a weld. The weld fixedly connects at least a part of the external part in its final shape to at least a part of the base part. Thus, the external part is rigidly fixed with the base part making the component sturdy.

In another embodiment of the turbomachine component, the external part in its final shape is fixedly connected to the base part by a holder. At least a part of the holder is fixedly connected to at least a part of the base part and at least a part of the external part in its final shape is sandwiched between at least a part of the holder and at least a part of the base part. This provides an advantage of not requiring welding on the external part. This is useful if it is impractical or undesirous to use other methods of directly connecting the external part to the base part.

In another embodiment, the turbomachine component is a blade or a vane and at least a part of an outer surface of the blade or the vane comprises the external part. Thus, the invention increases the ability of the blade or vane to withstand thermal stress in the gas turbine.

In another embodiment, the turbomachine component is a stationary component in the hot gas path of the gas turbine. Thus, the invention increases the ability of any stationary component in the hot gas path such as a heat shield, surfaces in the rotor segment, surfaces in the stator segment, etc, to withstand thermal stress in the gas turbines.

In another embodiment, the turbomachine component includes a cavity between the base part and the external part. The cavity is suitable to be supplied with a cooling fluid. Thus, the external part may be cooled and subsequently the performance of the external part is improved. Furthermore, a region of the base part in proximity to the external part may also be cooled.

In another embodiment, the turbomachine component includes a heat transfer enhancing structure. The heat transfer enhancing structure is positioned on a surface of the base part and/or on a surface of the external part. The surface of the base part and the surface of the external part together define the cavity. Thus, when the cooling fluid is present in the cavity, heat from the external part and/or the base part may be easily dissipated away to the cooling fluid.

The present invention further provides a method for manufacturing a turbomachine component. In the method, a base part of the turbomachine component is formed from a first material and an external part of the turbomachine component is formed from a second material. The external part is formed in a final shape of the external part. The first material has a first thermal conductivity and the second material has a second thermal conductivity. The first thermal conductivity is greater than the second thermal conductivity. Subsequently, the external part in the final shape is fixedly connected to the base part to form the turbomachine component such that at least a part of a surface of the base part is covered by the external part.

In one embodiment of the method, the external part is formed in its final shape by an additive manufacturing technique. Thus, complex geometries may be created in the external parts.

In another embodiment of the method, the external part is formed in its final shape by laser melting process. The laser melting process may be direct metal sintering or selective laser sintering. Thus, by using laser melting process, the external part may be manufactured from ceramic material or metallic material, and at the same time may contain complex geometrical features.

In another embodiment of the method, the external part in its final shape is fixedly connected to the base part by welding. Thus, the external part is rigidly fixed with the base part making the component sturdy.

The present technique is further described hereinafter with reference to illustrated embodiments shown in the accompanying drawings, in which:
- FIG 1: is a schematic diagram of an exemplary embodiment of a turbomachine component, according to the invention;
- FIG 2: is a schematic diagram of another exemplary embodiment of the turbomachine component depicting an external part in its final shape and a base part;
- FIG 3: is a schematic diagram of another exemplary embodiment of the turbomachine component depicting a weld;
- FIG 4: is a schematic diagram of an exemplary embodiment of a vane/blade of a gas turbine;
- FIG 5: is a schematic diagram of an exemplary embodiment of a cavity defined by the base part and the external part;
- FIG 6: is a schematic diagram of an exemplary embodiment of the cavity depicting heat transfer enhancing structures;
- FIG 7: is a schematic diagram of another exemplary embodiment of the vane/blade of the gas turbine depicting a holder;
- FIG 8: is a schematic diagram of another exemplary embodiment of the vane/blade of the gas turbine depicting difference in structural geometry compared to the exemplary embodiment schematically represented in FIG 7; and
- FIG 9: is a flowchart representing a method for manufacturing the turbomachine component, according to the present invention.

Hereinafter, the best mode for carrying out the present technique is described in details. Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

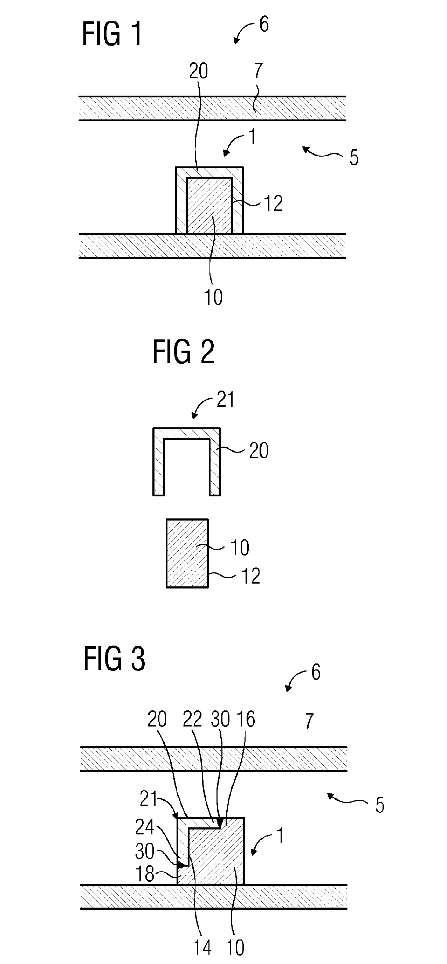

Referring now to FIG 1 along with FIGs 2 and 3, the technique of the invention is explained.

FIG 1 schematically represents a cross-section view of an exemplary embodiment of a turbomachine component 1, according to the invention. The turbomachine component 1 is suitable to be positioned in a hot gas path 5 of a gas turbine 6. For example, the component 1 may be, but not limited to, a vane or a blade or a static component of the gas turbine 6. Generally speaking, the hot gas path 5 includes parts of the turbine 6 that are exposed to high temperatures from hot gases discharged from the combustion system (not shown). FIG 1 represents a region of the hot gas path 5 of the turbine 6. The hot gas path 5 is defined by walls 7 of the turbine 6. The walls 7 may be, but not limited to, a body surface of the turbine 6 facing the hot gases flowing out from the combustion system through the turbine sections (not shown) including the stator sections and rotor sections.

The turbomachine component 1 includes a base part 10 and an external part 20. The base part 10 is manufactured from a first material and the external part 20 is manufactured from a second material. For example, the first material may be a metal, a superalloy, and so forth and the second material may be another metal, a superalloy, a ceramic material, and so forth.

As depicted in FIG 2, the external part 20 is manufactured in a final shape 21 of the external part 20. In the component 1, the external part 20 in the final shape 21 is fixedly connected to the base part 10. This essentially means that, the external part 20 is manufactured to a dedicated or predetermined shape which herein is referred to as the 'final shape' 21 and then mounted on to the base part 10. This aspect of the invention differentiates it from conventionally known prior art turbine components where one part of the prior art component made of one material is coated with layers of other material.

As a result of the fixed connection, as depicted in FIG 1, the external part 20 may completely cover a surface 12 of the base part 10, or alternatively, as depicted in FIG 3, the external part 20 may cover the base part 10 in such a way that only a part 14 of the surface 12 of the base part 10 is covered by the external part 20. By completely covering the surface 12 of the base part 10 as depicted in FIG 1, or by covering the part 14 of the surface 12 of the base part 10 as depicted in FIG 3, the surface 12 or the part 14 of the surface 12 is shielded from the hot gases in the hot gas path 5 of the turbine 6 during operation of the turbine 6.

According to the invention, the first material has a first thermal conductivity and the second material has a second thermal conductivity. The first thermal conductivity is greater than the second thermal conductivity. In the turbomachine component 1, the first thermal conductivity may be between 1.5 to 2.5 times of the second thermal conductivity, and more particularly between 1.8 to 2.2 times of the second thermal conductivity. For example, the first thermal conductivity may be 70 watts per meter Kelvin, and the second thermal conductivity may be 30 watts per meter Kelvin.

The second material from which the external part 20 is made may be a very high quality material, for example a superalloy, resistant against oxidation and hot corrosion whereas the first material from which the base part 10 is made may be a material, for example another superalloy, having a high strength against creep and cyclic fatigue. This essentially results in decrease of the use of the high quality material as it is not necessary to use the very high quality material for the entire component 1. Thus, an increase in the ability of the component 1 to withstand thermal stress in turbines 6 is achieved in an economically advantageous way. For example, in an exemplary embodiment of the turbomachine component 1, the second material from which the external part 20 is made may be a ceramic material such as silicon carbide, silicon nitride, or ceramic composites that can tolerate high temperatures. Thus, the component 1 containing the external part 20 made from the ceramic material can tolerate and perform in high temperatures.

The external part 20 may be manufactured in the final shape 21 of the external part 20 by an additive manufacturing process. Additive manufacturing processes are well known in the art of manufacturing articles and thus, the same has not been explained herein for the sake of brevity. The additive manufacturing process may be a laser melting process, for example selective laser sintering. Thus, the external part 20 being manufactured by using selective laser sintering may contain complex geometrical features (not shown) such as complex cooling passages, long and narrow cooling passages, ribbed ducts, porous structure of the external part 20 and so on. Additionally, the base part 10 may be made by a different manufacturing mode other than selective laser sintering, for example by casting.

Now referring to FIG 3, another exemplary embodiment of the turbomachine component 1 has been represented. The external part 20 in its final shape 21 is fixedly connected to the base part 10 by a weld 30. The weld 30 fixedly connects at least a part 22 of the external part 20 in its final shape 21 to at least a part 16 of the base part 10. It may be noted that there may be multiple welds 30 connecting the external part 20 with the base part 10. For example, FIG 3 also depicts another part 24 of the external part 20 fixedly connected to another part 18 of the base part 10 by the weld 30 located between the part 24 and the part 18. The weld 30 is obtained from welding which is known in the art of metalworking and thus, the same has not been described herein for the sake of brevity. Additionally, the weld 30 may be cooled by a suitable conventional technique of cooling used in gas turbine engines, for example film cooling.

Furthermore, alternatively laser cladding method or brazing method may be used to fixedly connect the base part 10 with the external part 20.

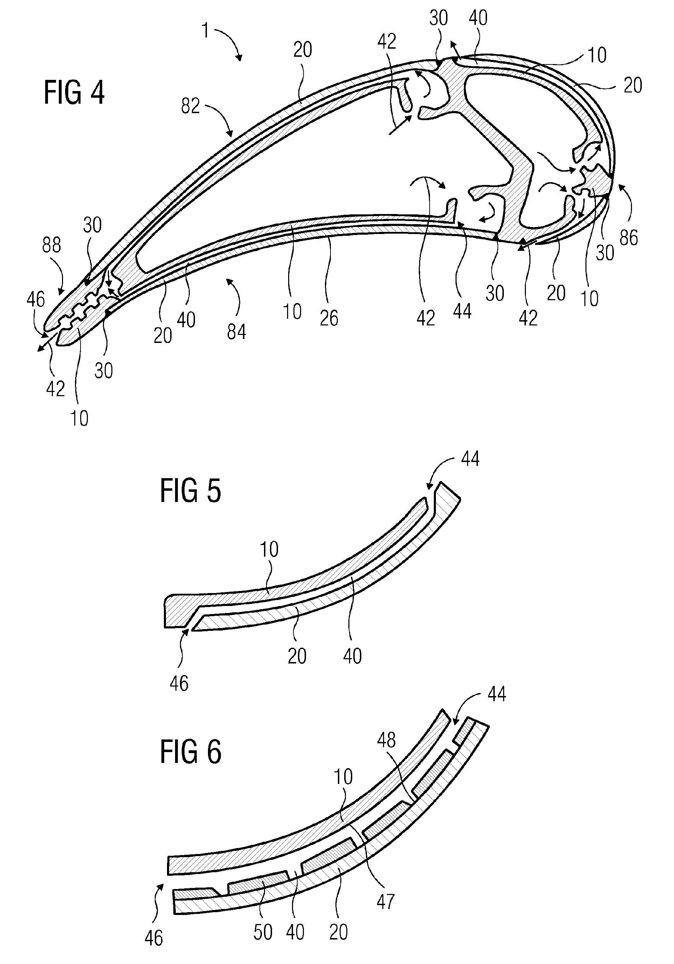

In an exemplary embodiment of invention, the component 1 is a vane or a blade of the gas turbine. It may be noted that in FIGs 4 to 8, the invention has been disclosed with respect to a vane of the gas turbine, but the same disclosure is applicable even for a blade of the gas turbine.

Now referring to FIG. 4, a cross-sectional view of an exemplary embodiment of the invention is schematically represented. The turbomachine component 1 is a vane of the gas turbine 6. The vane 1 is an airfoil. As is generally known, the airfoil contains a suction side 82, a pressure side 84, a leading edge 86, and a trailing edge 88. According to the invention, in the exemplary embodiment the external part 20 realizes at least a part of an outer surface 26 of the vane 1. As depicted in FIG 4, on the outer surface 26 of the vane 1, the external part 20 is present on the suction side 82 and/or the pressure side 84. In other words, the external part 20 is fixedly connected to the base part 10 on the suction side 82 and/or the pressure side 84 of the turbomachine component 1. In the exemplary embodiment, the base part 10 may be a metallic structure which when fitted with external part 20 will realize the vane 1. The external part 20 may be, but not limited to, a metallic shell which surrounds the base part 10 at selected positions such as suction side 82, pressure side 84, and so forth.

Optionally, the external part 20 may also be present at the leading edge 86 of the vane 1 fixedly connected to the base part 10.

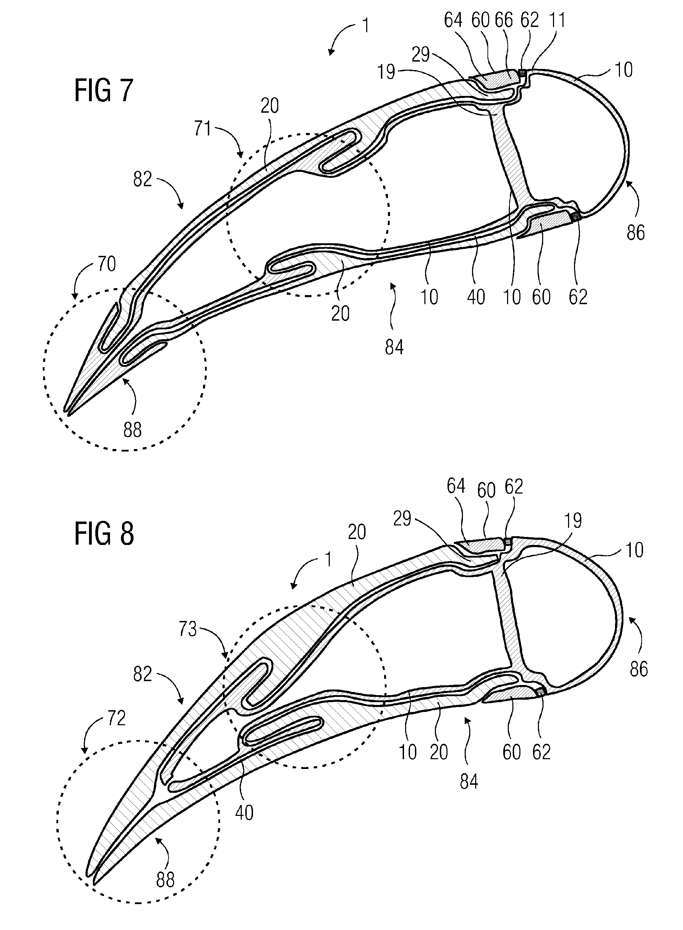

It may be noted that, though in FIG 4 the external part 20 is fixedly connected to the base part 10 by the welds 30, other techniques like brazing or cladding for fixedly connecting the external part 20 to the base part 10 may also be used. One such technique has been depicted in FIGs 7 and 8.

FIGs 7 and 8 schematically represent other exemplary embodiments of the turbomachine component 1, i.e. the vane. The external part 20 is fixedly connected to the base part 10 by a holder 60. A part 66 of the holder 60 is fixedly connected to a part 11 of the base part 10 and a part 29 of the external part 20 is sandwiched between a part 64 of the holder 60 and a part 19 of the base part 10. The holder 60 maintains the external part 20 in a desired position with respect to the base part 10. The holder 60 may be fixedly connected to the base part 10 by welding. The FIGs show a holder welding 62 fixedly connecting the base part 10 and the holder 60. Optionally, other techniques such as cladding or brazing may also be used to fixedly connect the holder 60 with the base part 10.

In another exemplary embodiment, as depicted in FIGs 7 and 8, the external part 20 may be, but not limited to, ceramic shell. Thus, in the vane 1, the base part 10 made from the first material is surrounded at least in parts by the external part 20 i.e. ceramic shells made from the second material, e.g. silicon carbide or silicon nitride or even ceramic composite.

Now referring to FIGs 4, 7 and 8, another exemplary embodiment of the turbomachine component 1 has been depicted. The turbomachine component 1 includes a cavity 40 between the base part 10 and the external part 20. The cavity 40 is suitable to be supplied with a cooling fluid 42. The cavity 40 may be, but not limited to, channels formed between the base part 10 and the external part 20. The cooling fluid 42 may be, but not limited to, cooled air. The cavity 40 contains an inlet 44 for entry of the cooling fluid 42 which then flows through the cavity 40 and exits the cavity 40 through an outlet 46.

FIGs 5 and 6 depict an exemplary embodiment of the cavity 40 defined by the base part 10 and the external part 20. The cavity 40 may be, but not limited to, channels of different lengths and different cross-sections having the inlet 44 and the outlet 46.

Furthermore, as depicted in FIG 6, in another exemplary embodiment of the turbomachine component 1, the cavity 40 includes a heat transfer enhancing structure 50. The heat transfer enhancing structure 50 is positioned on a surface of the external part 20 defining the cavity 40. Alternatively, the heat transfer enhancing structure 50 may be present on a surface of the base part 10 defining the cavity 40. Furthermore, the heat transfer enhancing structure 50 may be positioned on the surface of the base part 10 and the surface of the external part 20. The heat transfer enhancing structure 50 may be, but not limited to, ribs, fins, and so forth.

Additionally, to prevent ingestion of the hot gases under the external part 20 and also for cooling of the external part 20 during the operation of the turbine 6, some cooling holes (not shown) may be present in appropriate places such that the external part 20 may be cooled. The cooling holes may be present in the base part 10 and open under the external part 20.

Again referring to FIG 7 along with FIG 8, it may be noted that the overall geometry of each of the base part 10 and the external part 20 and their position with respect to each other may be varied in different embodiments of the turbomachine component 1. A variation in structural geometry is depicted by comparing regions 70, 71 marked in FIG 7 with corresponding regions 72, 73 marked in FIG 8. As an example, there may be various types of cooling passages at the trailing edge 88 for example matrix, pin fin, and so forth.

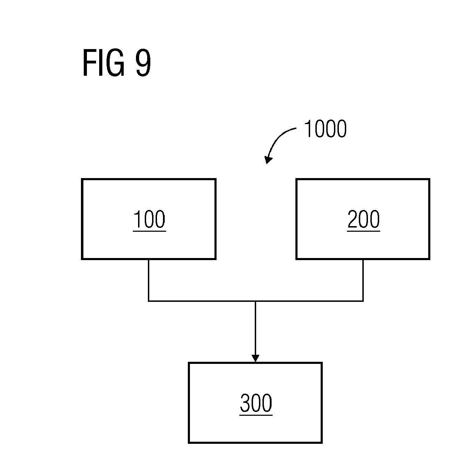

Now referring to FIG 9, a flowchart representing a method 1000 for manufacturing the turbomachine component 1 is represented. In the method, a base part 10 of the turbomachine component 1 is formed from a first material in a step 100. The first material has a first thermal conductivity. Independent from forming of the base part 10, an external part 20 of the turbomachine component 1 is formed from a second material in a step 200. The external part 20 is formed in a final shape 21 of the external part 20. The second material has a second thermal conductivity and the first thermal conductivity is greater than the second thermal conductivity. Subsequently, in a step 300, the external part 20 in the final shape 21 is fixedly connected to the base part 10 to form the turbomachine component 1 such that at least a part 14 of a surface 12 of the base part 10 is covered by the external part 20.

In one embodiment of the method 1000, in the step 200, the external part 20 is formed in its final shape 21 by an additive manufacturing technique such as direct metal sintering.

In another embodiment of the method 1000, in the step 200 the external part 20 is formed in its final shape 21 by laser melting process such as selective laser sintering.

In another embodiment of the method 1000, in the step 300 the external part 20 in its final shape 21 is fixedly connected to the base part 10 by welding.

While this invention has been described in detail with reference to certain embodiments, it should be appreciated that the present technique is not limited to those precise embodiments. Rather, in view of the present disclosure which describes the current best mode for practicing the invention, many modifications and variations would present themselves, to those skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A turbomachine component (1) adapted to be positioned in a hot gas path (5) of a gas turbine (6), said turbomachine component (1) comprising:
- a base part (10) manufactured from a first material, said first material having a first thermal conductivity, and
- an external part (20) manufactured from a second material, said second material having a second thermal conductivity, wherein said external part (20) is manufactured in a final shape (21) of said external part (20), and said external part (20) in said final shape (21) is fixedly connected to said base part (10) such that at least a part (14) of a surface (12) of said base part (10) is covered by said external part (20),
wherein said first thermal conductivity is greater than said second thermal conductivity.

2. The turbomachine component (1) according to claim 1,
wherein said external part (20) is manufactured in said final shape (21) of said external part (20) by an additive manufacturing process.

3. The turbomachine component (1) according to claim 2,
wherein said additive manufacturing process is a laser melting process.

4. The turbomachine component (1) according to any of claims 1 to 3,
wherein said first thermal conductivity is between 1.5 to 2.5 times of said second thermal conductivity, and more particularly between 1.8 to 2.2 times of said second thermal conductivity.

5. The turbomachine component (1) according to any of claims 1 to 4,
wherein said external part (20) comprises a ceramic material.

6. The turbomachine component (1) according to any of claims 1 to 5,
wherein said external part (20) in said final shape (21) is fixedly connected to said base part (10) by a weld (30) fixedly connecting at least a part (22,24) of said external part (20) in said final shape (21) to at least a part (16,18) of said base part (10).

7. The turbomachine component (1) according to any of claims 1 to 5,
wherein said external part (20) in said final shape (21) is fixedly connected to said base part (10) by a holder (60) wherein at least a part (66) of said holder (60) is fixedly connected to at least a part (11) of said base part (10) and at least a part (29) of said external part (20) in said final shape (21) is sandwiched between at least a part (64) of said holder (60) and at least a part (19) of said base part (10).

8. The turbomachine component (1) according to any of claims 1 to 7,
wherein said turbomachine component (1) is a blade or a vane and at least a part of an outer surface (26) of said blade or said vane comprises said external part (20).

9. The turbomachine component (1) according to any of claims 1 to 7,
wherein said turbomachine component (1) is a stationary component in said hot gas path (5) of said gas turbine (6).

10. The turbomachine component (1) according to any of claims 1 to 9,
comprising a cavity (40) between said base part (10) and said external part (20), wherein said cavity (40) is suitable to be supplied with a cooling fluid (42).

11. The turbomachine component (1) according to claim 10, further comprising a heat transfer enhancing structure (50) positioned on a surface (47) of said base part (10) and/or a surface (48) of said external part (20), wherein said surface (47) of said base part (10) and said surface (48) of said external part (20) define said cavity (40).

12. A method (1000) for manufacturing a turbomachine component (1), the method comprising:
- forming (100) a base part of said turbomachine component from a first material wherein said first material has a first thermal conductivity,
- forming (200) an external part of said turbomachine component from a second material in a final shape of said external part, wherein said second material has a second thermal conductivity, and wherein said first thermal conductivity is greater than said second thermal conductivity, and
- fixedly connecting (300) said external part in said final shape to said base part to form said turbomachine component such that at least a part of a surface of said base part is covered by said external part.

13. The method according to claim 12,
wherein said external part is formed in said final shape of said external part by an additive manufacturing technique.

14. The method according to claim 13,
wherein said additive manufacturing technique is a laser melting process.

15. The method according to any of claims 12 to 14,
wherein said external part in said final shape is fixedly connected to said base part by welding.
